(19) Europäisches Patentamt
European Patent Office
Office européen des brevets

(11) Veröffentlichungsnummer: **0 108 970**
**B1**

(12) # EUROPÄISCHE PATENTSCHRIFT

(45) Veröffentlichungstag der Patentschrift: **07.01.88**

(51) Int. Cl.⁴: **H 01 M 8/18**, H 01 M 4/96

(21) Anmeldenummer: **83110712.3**

(22) Anmeldetag: **26.10.83**

(54) **Wasserstoff/Brom-Zelle.**

(30) Priorität: **11.11.82 DE 3241801**

(43) Veröffentlichungstag der Anmeldung: **23.05.84 Patentblatt 84/21**

(45) Bekanntmachung des Hinweises auf die Patenterteilung: **07.01.88 Patentblatt 88/1**

(84) Benannte Vertragsstaaten: **DE FR GB**

(56) Entgegenhaltungen:
**FR - A - 2 150 662**
**US - A - 4 241 104**
**US - A - 4 264 686**

**JOURNAL OF THE ELECTROCHEMICAL SOCIETY, Band 127, Nr. 3, März 1980, Seiten 549-555, Manchester, New Hampshire, US; R.S. YEO et al.: "A hydrogen-bromine cell for energy storage applications"**

(73) Patentinhaber: **Siemens Aktiengesellschaft Berlin und München, Wittelsbacherplatz 2, D-8000 München 2 (DE)**

(72) Erfinder: **Höhne, Karl, Dr., Reinigerstrasse 15, D-8520 Erlangen (DE)**
Erfinder: **Starbeck, Gerd, Effeltricher Strasse 32, D-8500 Nürnberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft eine Wasserstoff/Brom-Zelle mit die Elektroden umgebenden Zellrahmen aus Graphit.

Für einen breiten Einsatz von regenerativen Energiequellen, wie Sonne und Wind, werden für die meisten Anwendungsgebiete Speicher benötigt, um das stark schwankende Energieangebot dem Bedarf anpassen zu können. Ferner wird auch nach Möglichkeiten für die Energiespeicherung in dezentralen Anlagen zum Lastausgleich gesucht. In beiden Fällen kann der Blei-Akkumulator eingesetzt werden, der jedoch die Nachteile aufweist, dass er relativ teuer und schwer ist und insbesondere eine geringe Energiedichte besitzt.

Ein neuer Speichertyp, der für die genannten Zwecke eingesetzt werden kann, ist die Wasserstoff/Brom-Zelle (siehe: «J. Electrochem. Soc.», Vol. 127 (1980), Seiten 549 bis 555). Bei dieser Zelle wird die Elektrolyse von Bromwasserstoffsäure (HBr) zur Speicherung der elektrischen Energie herangezogen:

$$2\,HBr \underset{\text{entladen}}{\overset{\text{laden}}{\rightleftarrows}} H_2 + Br_2 .$$

Bei der HBr-Elektrolyse werden Wasserstoff ($H_2$) und Brom ($Br_2$) erzeugt, die getrennt gespeichert und – bei Bedarf – zur Gewinnung von elektrischer Energie wieder zu Bromwasserstoffsäure umgesetzt werden, und zwar in einer Brennstoffzellenreaktion (siehe beispielsweise: «Energy», Vol. 4 (1979), Seiten 61 bis 66). Der Vorteil des Wasserstoff/Brom-Systems im Vergleich mit dem entsprechenden System Wasserstoff/Sauerstoff liegt im übrigen in der hohen Reversibilität der Brom-Elektrode.

Um das Leistungsgewicht und die Abmessungen des Energiewandlers möglichst niedrig zu halten, sollten die beiden vorstehend genannten Reaktionen, d.h. die Elektrolyse und die Brennstoffzellenreaktion, in ein und derselben Zelle ablaufen. Derartige Wasserstoff/Brom-Zellen ($H_2$/$Br_2$-Zellen) sollen einerseits preiswert sein, andererseits müssen sie aber aus einem Material bestehen, das gegenüber den Reaktanten korrosionsbeständig ist.

Als korrosive Medien treten in $H_2$/$Br_2$-Zellen insbesondere Brom und Bromwasserstoffsäure auf. Als Materialien beim Zellaufbau, d.h. für die Zellrahmen, kommen deshalb insbesondere Kunststoffe, wie Polytetrafluoräthylen, in Betracht (siehe: «Hydrogen Energy System», Proceedings of the 2nd World Hydrogen Energy Conference, Pergamon Press, 1978, Seiten 709 bis 730). Diese Materialien sind allerdings nichtleitend, d.h. sie besitzen isolierende Eigenschaften, so dass die Stromabnahme bzw. die Stromzufuhr zu den Elektroden Schwierigkeiten bereitet.

Von den elektrisch leitenden Materialien sind gegen die aggressiven Chemikalien Brom und Bromwasserstoffsäure nur Edelmetalle, wie Palladium und Platin, sowie Niob und Tantal beständig. Diese Materialien sind aber teuer und darüber hinaus sehr schwer, so dass sie das Leistungsgewicht der Zellen ungünstig beeinflussen.

Als Material für $H_2$/$Br_2$-Zellen wurde auch bereits Graphit angegeben. Dieses Material ist preiswert und auch elektrisch leitend. Beim Einsatz von Graphit als Zellrahmenmaterial in $H_2$/$Br_2$-Zellen hat sich nun aber gezeigt, dass bereits nach kurzer Betriebszeit – aufgrund der Porosität des Materials – eine Diffusion von Brom durch den Graphit erfolgt, d.h. Brom durch die Zellrahmen austritt.

Aufgabe der Erfindung ist es, eine $H_2$/$Br_2$-Zelle, welche Zellrahmen aus Graphit aufweist, derart auszugestalten, dass eine Diffusion von Brom durch die Zellrahmen verhindert wird.

Dies wird erfindungsgemäss dadurch erreicht, dass wenigstens die der Elektrode zugewandte Oberfläche des Zellrahmens an der Brom-Elektrode mit einer Schicht aus Pyrographit versehen ist.

Die erfindungsgemässe $H_2$/$Br_2$-Zelle ist absolut $Br_2$- und auch HBr-dicht, d.h. die Diffusion dieser Substanzen durch die Zellrahmen wird vollständig unterbunden.

Vorteilhaft kann die erfindungsgemässe $H_2$/$Br_2$-Zelle auf der $H_2$-Seite einen entsprechenden Zellrahmen aufweisen wie auf der $Br_2$-Seite, d.h. einen Zellrahmen, bei dem wenigstens die der Wasserstoff-Elektrode zugewandte Oberfläche mit einer Schicht aus Pyrographit versehen ist. Ein derartiger Zellrahmen ist nämlich absolut $H_2$-dicht und verhindert somit das Austreten von Wasserstoff. Ausserdem kann auf diese Weise auch das Austreten von $Br_2$ bzw. HBr verhindert werden, und zwar für den Fall, dass diese Substanzen durch die Membran, die die $Br_2$- von der $H_2$-Elektrode trennt, hindurchtreten sollten. Nimmt man den Einsatz verschiedener Zellrahmen in Kauf, so kann bei der erfindungsgemässen Zelle auf der $H_2$-Seite beispielsweise aber auch mit Kunststoff imprägnierte Kohle als Rahmenmaterial zum Einsatz gelangen.

Die auf den Graphit-Zellrahmen befindliche Schicht aus Pyrographit weist vorzugsweise eine Schichtdicke von etwa 20 bis 30 µm auf. Unter «Pyrographit», der auch als pyrolytischer Graphit bezeichnet wird, wird dabei ein Material verstanden, das durch pyrolytische Zersetzung gas- oder dampfförmiger Kohlenwasserstoffe, wie Methan, Äthan, Propan und Acetylen, bei Temperaturen oberhalb 1800 °C erhalten wird. Im Gegensatz zu dem bei niederen Temperaturen ($<$ 1700 °C) gebildeten sogenannten Pyrokohlenstoff, der vorwiegend feinkristallin und isotrop ist, zeichnet sich der Pyrographit durch eine stark anisotrope, graphitähnliche Schichtstruktur aus.

Anhand von Beispielen und einer Figur, in der eine bevorzugte Ausführungsform der erfindungsgemässen $H_2$/$Br_2$-Zelle dargestellt ist, soll die Erfindung noch näher erläutert werden.

Die in der Figur dargestellte $H_2$/$Br_2$-Zelle 10 weist einen Zellrahmen 11 auf der $Br_2$-Seite und einen Zellrahmen 12 auf der $H_2$-Seite auf. Beide Zellrahmen bestehen aus Graphit, wobei jeweils zumindest die der entsprechenden Elektrode zugewandte Oberfläche des Rahmens mit einer Pyrographit-Schicht versehen ist; der Graphit gelangt vorzugsweise in Form von Elektrographit zum Einsatz. Der Zellrahmen 11 umschliesst die Brom-Elektrode 13, der Zellrahmen 12 die Wasserstoff-Elektrode 14; beide Zellrahmen weisen dazu eine entsprechende Aussparung auf. Die Oberfläche der Aussparung im Zellrahmen 11 und diejenige der Aussparung im Zellrahmen 12 ist dann mit Pyrographit überzogen.

Die $Br_2$-Elektrode 13 besteht vorzugsweise aus einem Graphitfilz, der gleichzeitig zur Kontaktierung dient.

Die $H_2$-Elektrode 14 besteht vorzugsweise aus mit Platin belegter Kohle. Ein Graphitfilz 15 sorgt für den elektrischen Kontakt zwischen der $H_2$-Elektrode 14 und dem Zellrahmen 12. Die beiden Elektroden 13 und 14 sind durch eine Membran 16 voneinander getrennt. Als Membran 16 dient eine Kationenaustauschermembran, insbesondere auf der Basis von perfluoriertem Polytetrafluoräthylen.

Zur Zuführung und Abführung der Reaktanten bzw. der Reaktionsprodukte dienen auf der $Br_2$-Seite Leitungen 17 und 18 und auf der $H_2$-Seite Leitungen 19 und 20, welche in Form von Bohrungen die Zellrahmen 11 bzw. 12 durchdringen. Entsprechende Bohrungen weisen auch zwei Metallplatten 21 und 22 auf, durch welche – mittels isolierter Schrauben – die beiden Rahmen 11 und 12 zusammengepresst werden. Die Platten 21 und 22, die beispielsweise aus nichtrostendem Stahl bestehen und quasi als die beiden Pole der Zelle 10 fungieren, können aber auch entfallen, wenn die Stromzuführung bzw. -abnahme in anderer Weise erfolgt. Der Elektrolyt, d.h. das $HBr$-$Br_2$-Gemisch wird mit Hilfe einer Membranpumpe im Kreislauf durch die Zelle, d.h. deren $HBr$-$Br_2$-Teil, gepumpt.

Die Beschichtung der Zellrahmen mit Pyrographit erfolgt z.B. in der Weise, dass den Zellrahmen, deren Oberfläche auf eine hohe Temperatur aufgeheizt wird, ein gasförmiger Kohlenwasserstoff zugeführt wird. Dabei wird der Kohlenwasserstoff thermisch zersetzt und auf dem Substrat, d.h. dem Zellrahmen, wird der Pyrographit als anisotrope Schicht mit hoher Dichte und laminarer Struktur abgeschieden. Die Abscheidung erfolgt vorzugsweise bei folgenden Reaktionsbedingungen: Temperatur: 1900 °C, Kohlenwasserstoff: Methan mit einem Druck von 5 mbar; die Abscheidungsrate beträgt im allgemeinen 0,5 bis 0,8 µm/min.

Eine Laborausführung der erfindungsgemässen Zelle weist beispielsweise folgende Abmessungen auf: Die runden Metallplatten haben einen Durchmesser von 8,5 cm und eine Dicke von 8 mm; die Zellrahmen haben jeweils einen Durchmesser von 5,7 cm und eine Dicke von ca. 2 cm. Die $H_2$-Elektrode enthält etwa 2,5 bis 5 mg $Pt/cm^2$ und weist eine aktive Fläche von 12,5 $cm^2$ auf.

Eine derartige Zelle kann in einfacher Weise zum Aufbau von Batterien dienen, bei denen die Einzelzellen jeweils elektrisch in Serie geschaltet sind. Dazu werden Zellrahmen verwendet, die auf beiden Seiten mit Aussparungen versehen sind. Hierbei würde dann beispielsweise in der zweiten Aussparung des Zellrahmens 12 eine Brom-Elektrode angeordnet werden und daran – unter Wegfall der Platte 22 – eine weitere Membran, auf die dann wiederum eine Wasserstoff-Elektrode folgen würde. Auf der $Br_2$-Seite wäre es entsprechend umgekehrt. Die Zu- und Abführungsleitungen müssen in diesem Fall allerdings einen anderen Verlauf nehmen.

Bei der Elektrolyse, d.h. bei der Energiespeicherung, wird beispielsweise von 6 M HBr ausgegangen, die bis zu 1 M HBr abgereichert wird. Zur Speicherung von 1 kWh sind dann 13,4 l 6 M HBr erforderlich (Spannung: 560 mV). Bei der Brennstoffzellenreaktion wird die 1 M HBr wieder auf 6 M HBr aufkonzentriert. Dabei ergibt sich ein $H_2$-Bedarf von ca. 500 l/kWh. Die erfindungsgemässe Zelle kann beispielsweise aber auch in der Weise betrieben werden, dass zur Elektrolyse ein Elektrolyt mit einer Anfangskonzentration von 3,65 M HBr und 0,1 M $Br_2$ und für die Brennstoffzellenreaktion ein Elektrolyt mit einer Ausgangskonzentration von 1,65 M HBr und 1,3 M $Br_2$ eingesetzt wird (Temperatur: 50 °C).

**Patentansprüche**

1. Wasserstoff/Brom-Zelle mit die Elektroden umgebenden Zellrahmen aus Graphit, dadurch gekennzeichnet, dass wenigstens die der Elektrode zugewandte Oberfläche des Zellrahmens an der Brom-Elektrode mit einer Schicht aus Pyrographit versehen ist.

2. Wasserstoff/Brom-Zelle nach Anspruch 1, dadurch gekennzeichnet, dass wenigstens die der Elektrode zugewandte Oberfläche des Zellrahmens an der Wasserstoff-Elektrode mit einer Schicht aus Pyrographit versehen ist.

3. Wasserstoff/Brom-Zelle nach Anspruch 1 oder 2, dadurch gekennzeichnet, dass die Pyrographit-Schicht eine Schichtdicke von etwa 20 bis 30 µm aufweist.

4. Wasserstoff/Brom-Zelle nach einem der Ansprüche 1 bis 3, dadurch gekennzeichnet, dass die Brom-Elektrode aus Kohle, insbesondere Graphit, besteht.

5. Wasserstoff/Brom-Zelle nach einem oder mehreren der Ansprüche 1 bis 4, dadurch gekennzeichnet, dass die Wasserstoff-Elektrode aus mit Platin belegter Kohle besteht.

**Claims**

1. A hydrogen/bromine cell having graphite cell frames which surround the electrodes, characterised in that at least that surface of the cell frame on the side of the bromine electrode which faces the electrode, is provided with a layer of pyrographite.

2. A hydrogen/bromine cell as claimed in Claim 1, characterised in that at least that surface of the cell frame on the side of the hydrogen electrode which faces the electrode, is provided with a layer of pyrographite.

3. A hydrogen/bromine cell as claimed in Claim

1 or 2, characterised in that the pyrographite layer has a thickness of approximately 20 to 30 µm.

4. A hydrogen/bromine cell as claimed in one of Claims 1 to 3, characterised in that the bromine electrode consists of carbon, in particular but not exclusively graphite.

5. A hydrogen/bromine cell as claimed in one or more of Claims 1 to 4, characterised in that the hydrogen electrode consists of carbon coated with platinum.

**Revendications**

1. Cellule hydrogène/brome ayant des cadres de cellule, qui sont en graphite et qui entourent les électrodes, caractérisé en ce qu'au moins la surface du cadre de cellule à l'électrode de brome, tournée vers l'électrode, est munie d'une couche de graphite pyrolytique.

2. Cellule hydrogène/brome suivant la revendication 1, caractérisée en ce qu'au moins la surface du cadre de cellule à l'électrode d'hydrogène, tournée vers l'électrode, est munie d'une couche de graphite pyrolytique.

3. Cellule hydrogène/brome suivant la revendication 1 ou 2, caractérisée en ce que la couche de graphite pyrolytique a une épaisseur de 20 à 30 microns environ.

4. Cellule hydrogène/brome suivant les revendications 1 à 3, caractérisée en ce que l'électrode de brome est en charbon, notamment en graphite.

5. Cellule hydrogène/brome suivant l'une des revendications 1 à 4, caractérisée en ce que l'électrode d'hydrogène est en charbon revêtu de platine.

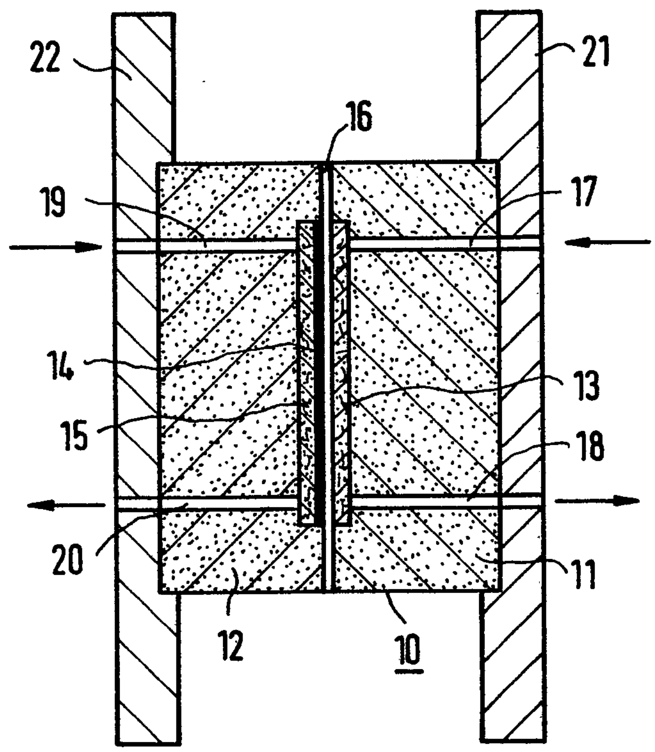
22
21
16
19
17
14
13
15
18
20
11
12
10